# EUROPÄISCHE PATENTANMELDUNG

(11) **EP 3 457 015 A1**
(43) Veröffentlichungstag der Anmeldung: **20.03.2019**
(21) Anmeldenummer: 18180142.4
(22) Anmeldetag: 27.06.2018
(51) Int. Cl.: F16L 27/107, F16L 27/113, F16L 27/10, F16L 37/50, H01M 10/625, H01M 10/613

(54) **FLUIDVERBINDER**

(30) Priorität: 19.09.2017 DE 102017121637
(71) Anmelder: VERITAS AG, 63571 Gelnhausen (DE)
(72) Erfinder: Garcia, Fabien, 63683 Ortenberg (DE)
(74) Vertreter: Patentship Patentanwaltsgesellschaft mbH

(57) **Zusammenfassung**

Die vorliegende Erfindung betrifft einen Fluidverbinder (100) zum Herstellen einer Fluidverbindung; mit einem ersten rohrförmigen Gehäuseteil (101), wobei das erste rohrförmige Gehäuseteil (101) einen ersten Anschluss (103) zum Verbinden mit einer ersten fluidtechnischen Leitung aufweist, und wobei das erste rohrförmige Gehäuseteil (101) eine erste Verbindungsaufnahme (107) mit einem nach Innen geformten umlaufenden ersten Kragen (139-1) aufweist; einem zweiten rohrförmigen Gehäuseteil (109), wobei das zweite rohrförmige Gehäuseteil (109) einen zweiten Anschluss (109) zum Verbinden mit einer zweiten fluidtechnischen Leitung aufweist, und wobei das zweite rohrförmige Gehäuseteil (109) eine zweite Verbindungsaufnahme (115) mit einem nach Innen geformten umlaufenden zweiten Kragen (139-2) aufweist; und einem rohrförmigen Verbindungselement (117), wobei das rohrförmige Verbindungselement (117) einen ersten Dichtabschnitt (143-1) aufweist, welcher in der ersten Verbindungsaufnahme (107) aufgenommen ist, und wobei das rohrförmige Verbindungselement (117) einen zweiten Dichtabschnitt (143-2) aufweist, welcher in der zweiten Verbindungsaufnahme (115) aufgenommen ist, wobei das rohrförmige Verbindungselement (117) einen ersten umlaufenden verformbaren Rastvorsprung (141-1) für eine Rastverbindung mit dem ersten Kragen (139-1) aufweist, wobei das rohrförmige Verbindungselement (117) einen zweiten umlaufenden verformbaren Rastvorsprung (141-2) für eine Rastverbindung mit dem zweiten Kragen (139-2) aufweist, und wobei das rohrförmige Verbindungselement (117) mit dem ersten rohrförmigen Gehäuseteil (101) und mit dem zweiten rohrförmigen Gehäuseteil (109) formschlüssig verrastbar und ausgebildet ist, das erste rohrförmige Gehäuseteil (101) und das zweite rohrförmige Gehäuseteil (109) fluiddicht zu verbinden.

## Beschreibung

Die vorliegende Erfindung betrifft einen Fluidverbinder zum Herstellen einer Fluidverbindung.

In einem Fahrzeug wird eine Vielzahl von Fluidverbindungen benötigt, um unterschiedliche Arten von Fluid, wie z.B. Motoröl in einer Getriebeölleitung oder Kühlmittel in einer Kühlmittelleitung, zu leiten. In einem elektrisch angetriebenen Fahrzeug ist es beispielsweise nötig, die Batterien zu kühlen, um einen vorteilhaften Wirkungsgrad der Batterien während der Lebensdauer der Batterien sicherzustellen. Zum Verlegen von verschiedenen Fluidleitungen einer Fluidverbindung im Bauraum eines Fahrzeuges ist es beispielhaft notwendig einen Fluidverbinder zu verwenden, durch welchen verschiedene Arten von Fluidleitungen miteinander vorteilhaft verbunden werden können.

Die Druckschrift EP 2 713 088 A1 beschreibt ein Steckstück zum dichtenden Verbinden zweier einander zugeordneter Zylinderflächen. Das Steckstück weist einen im Wesentlichen hohlkörperförmigen Stützkörper auf, welcher wenigstens ein ringförmig umlaufendes Dichtelement aufweist, das zur Herstellung einer dichtenden Verbindung mit einer der abzudichtenden Zylinderflächen in Eingriff bringbar ist.

Es ist die der Erfindung zugrundeliegende Aufgabe, einen Fluidverbinder für eine Fluidverbindung anzugeben, welcher eine wirksame fluidtechnische Abdichtung sicherstellt.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch einen Fluidverbinder zum Herstellen einer Fluidverbindung gelöst, mit einem ersten rohrförmigen Gehäuseteil, wobei das erste rohrförmige Gehäuseteil einen ersten Anschluss zum Verbinden mit einer ersten fluidtechnischen Leitung aufweist, und wobei das erste rohrförmige Gehäuseteil eine erste Verbindungsaufnahme mit einem nach Innen geformten umlaufenden ersten Kragen aufweist; einem zweiten rohrförmigen Gehäuseteil, wobei das zweite rohrförmige Gehäuseteil einen zweiten Anschluss zum Verbinden mit einer zweiten fluidtechnischen Leitung aufweist, und wobei das zweite rohrförmige Gehäuseteil eine zweite Verbindungsaufnahme mit einem nach Innen geformten umlaufenden zweiten Kragen aufweist; und einem rohrförmigen Verbindungselement, wobei das rohrförmige Verbindungselement einen ersten Dichtabschnitt aufweist, welcher in der ersten Verbindungsaufnahme aufgenommen ist, und wobei das rohrförmige Verbindungselement einen zweiten Dichtabschnitt aufweist, welcher in der zweiten Verbindungsaufnahme aufgenommen ist, wobei das rohrförmige Verbindungselement einen ersten umlaufenden verformbaren Rastvorsprung für eine Rastverbindung mit dem ersten Kragen aufweist, wobei das rohrförmige Verbindungselement einen zweiten umlaufenden verformbaren Rastvorsprung für eine Rastverbindung mit dem zweiten Kragen aufweist, und wobei das rohrförmige Verbindungselement mit dem ersten rohrförmigen Gehäuseteil und mit dem zweiten rohrförmigen Gehäuseteil formschlüssig verrastbar und ausgebildet ist, das erste rohrförmige Gehäuseteil und das zweite rohrförmige Gehäuseteil fluiddicht zu verbinden.

Dadurch wird beispielsweise der technische Vorteil erreicht, dass durch die beidseitige formschlüssige Rastverbindung zwischen den jeweiligen Rastvorsprüngen und den jeweiligen Krägen sichergestellt wird, dass das rohrförmige Verbindungselement nicht unbeabsichtigt aus dem ersten rohrförmigen Gehäuseteil und aus dem zweiten rohrförmigen Gehäuseteil herausgezogen wird. Somit begrenzt der jeweilige Kragen eine Bewegung des jeweiligen Rastvorsprungs in einer Längsrichtung des Fluidverbinders.

Dadurch, dass der jeweilige Dichtabschnitt des rohrförmigen Verbindungselements in der jeweiligen Verbindungsaufnahme des jeweiligen rohrförmigen Gehäuseteils aufgenommen ist, wird eine besonders wirksame fluiddichte Verbindung zwischen dem rohrförmigen Verbindungselement und dem jeweiligen rohrförmigen Gehäuseteil sichergestellt.

Somit wird durch das rohrförmige Verbindungselement eine einfach bereitzustellende fluiddichte Verbindung zwischen dem ersten rohrförmigen Gehäuseteil und dem zweiten rohrförmigen Gehäuseteil sichergestellt, wodurch ein wirksames Leiten von Fluid zwischen dem ersten und zweiten rohrförmigen Gehäuseteil sichergestellt wird.

Durch das rohrförmige Verbindungselement kann ferner eine radiale Montage des Fluidverbinders in begrenzten Bauräumen des Fahrzeuges sichergestellt werden, da das erste rohrförmige Gehäuseteil durch das rohrförmige Verbindungselement gegenüber dem zweiten rohrförmigen Gehäuseteil versetzt werden kann, so dass Toleranzen, Dispersionen und Vibrationen ausgeglichen werden können.

Der Toleranzausgleich des Fluidverbinders kann durch eine elastische Verformung des rohrförmigen Verbindungselements sichergestellt werden. Darüber hinaus kann der Toleranzausgleich des Fluidverbinders auch durch eine axiale und/oder radiale Bewegung des rohrförmigen Verbindungselements gegenüber dem ersten und/oder zweiten rohrförmigen Gehäuseteil sichergestellt werden.

Darüber hinaus kann der Toleranzausgleich des Fluidverbinders auch durch eine axiale und/oder radiale Bewegung des erste rohrförmigen Gehäuseteil und/oder des zweiten rohrförmigen Verbindungselements gegenüber der ersten und/oder zweiten fluidtechnischen Leitung, sichergestellt werden, da der erste und/oder zweite Anschluss eine axiale und/oder radiale Bewegung der jeweiligen fluidtechnischen Leitung gegenüber dem jeweiligen rohrförmigen Gehäuseteil sicherstellen kann.

In einer vorteilhaften Ausführungsform des Fluidverbinders ist das rohrförmige Verbindungselement als ein elastisches rohrförmiges Verbindungselement ausgebildet.

Dadurch wird beispielsweise der technische Vorteil erreicht, dass das elastische rohrförmige Verbindungselement vorteilhaft elastisch verformt werden kann, wodurch das erste und zweite rohrförmige Gehäuseteil gegeneinander bewegt werden können, und das elastische rohrförmige Verbindungselement weiterhin eine vorteilhafte fluidtechnische Verbindung zwischen den Gehäuseteilen bereitstellen kann. Beispielweise kann das elastische rohrförmige Verbindungselement einen Elastomerschlauch, z.B. Gummischlauch, umfassen.

In einer vorteilhaften Ausführungsform des Fluidverbinders ist das rohrförmige Verbindungselement zumindest abschnittsweise verformbar, um das erste rohrförmige Gehäuseteil gegenüber dem zweiten rohrförmigen Gehäuseteils zumindest abschnittsweise zu bewegen.

Dadurch wird beispielsweise der technische Vorteil erreicht, dass auch ein verformbarer Abschnitt des rohrförmigen Verbindungselements ermöglicht, dass das erste rohrförmige Gehäuseteil gegenüber dem zweiten rohrförmigen Gehäuseteil bewegt werden kann, ohne dass die fluidtechnische Verbindung zwischen den beiden rohrförmigen Gehäuseteilen unterbrochen wird, so dass kein Fluid austritt.

In einer vorteilhaften Ausführungsform des Fluidverbinders sind der erste Dichtabschnitt und der erste umlaufende verformbare Rastvorsprung verbunden, und sind der zweite Dichtabschnitt und der zweite umlaufende verformbare Rastvorsprung verbunden.

Dadurch wird beispielsweise der technische Vorteil erreicht, dass durch die Verbindung zwischen dem jeweiligen Dichtabschnitt und dem jeweiligen Rastvorsprung eine besonders wirksame Integration der Dichtfunktion und der Haltefunktion des rohrförmigen Verbindungselements an einem einzigen Bereich des rohrförmigen Verbindungselements sichergestellt wird. Hierbei ist der erste Dichtabschnitt und der erste umlaufende verformbare Rastvorsprung insbesondere einstückig ausgebildet. Hierbei ist der zweite Dichtabschnitt und der zweite umlaufende verformbare Rastvorsprung insbesondere einstückig ausgebildet.

In einer vorteilhaften Ausführungsform des Fluidverbinders umfassen der erste und zweite Dichtabschnitt jeweils eine umlaufende Dichtlippe.

Dadurch wird beispielsweise der technische Vorteil erreicht, dass durch die umlaufende Dichtlippe eine besonders wirksame fluidtechnische Abdichtung zwischen dem rohrförmigen Verbindungselement und dem jeweiligen rohrförmigen Gehäuseteil sichergestellt wird.

In einer vorteilhaften Ausführungsform des Fluidverbinders ist der erste Dichtabschnitt mit der ersten Verbindungsaufnahme formschlüssig und/oder kraftschlüssig verbunden, und ist der zweite Dichtabschnitt mit der zweiten Verbindungsaufnahme formschlüssig und/oder kraftschlüssig verbunden.

Dadurch wird beispielsweise der technische Vorteil erreicht, dass eine formschlüssige und/oder kraftschlüssige Verbindung eine wirksame fluidtechnische Abdichtung zwischen dem jeweiligen Dichtabschnitt und der jeweiligen Verbindungsaufnahme sicherstellen.

In einer vorteilhaften Ausführungsform des Fluidverbinders weist die erste Verbindungaufnahme eine erste Verbindungsdichtfläche auf, weist die zweite Verbindungaufnahme eine zweite Verbindungsdichtfläche auf, weist der erste Dichtabschnitt eine erste Dichtfläche auf, welche an der ersten Verbindungsdichtfläche fluiddicht anliegt, und weist der zweite Dichtabschnitt eine zweite Dichtfläche auf, welche an der zweiten Verbindungsdichtfläche fluiddicht anliegt.

Dadurch wird beispielsweise der technische Vorteil erreicht, dass durch das Anliegen der jeweiligen Dichtfläche an der jeweiligen Verbindungsdichtfläche eine wirksame fluidtechnische Abdichtung sichergestellt wird.

In einer vorteilhaften Ausführungsform des Fluidverbinders erstrecken sich die erste und zweite Verbindungsdichtfläche entlang einer Längsachse des Fluidverbinders, und erstrecken sich die erste und zweite Dichtfläche insbesondere schräg zu einer Längsachse des Fluidverbinders.

Dadurch wird beispielsweise der technische Vorteil erreicht, dass durch die schräge Anordnung der ersten und zweiten Dichtfläche zu der ersten und zweiten Verbindungsdichtfläche, die jeweilige Dichtfläche zumindest abschnittsweise an der jeweiligen Verbindungsdichtfläche anliegt, um eine wirksame fluidtechnische Abdichtung zwischen dem rohrförmigen Verbindungselement und dem jeweiligen rohrförmigen Gehäuseteil sicherzustellen.

In einer vorteilhaften Ausführungsform des Fluidverbinders liegt der erste umlaufende verformbare Rastvorsprung an dem nach Innen geformten umlaufenden ersten Kragen an, um ein Herausziehen des rohrförmigen Verbindungselements aus dem ersten rohrförmigen Gehäuseteil zu verhindern, und liegt der zweite umlaufende verformbare Rastvorsprung an dem nach Innen geformten umlaufenden zweiten Kragen an, um ein Herausziehen des rohrförmigen Verbindungselements aus dem zweiten rohrförmigen Gehäuseteil zu verhindern.

Dadurch wird beispielsweise der technische Vorteil erreicht, dass die jeweilige Rastverbindung eine wirksame Fixierung des rohrförmigen Verbindungselements in dem ersten und zweiten rohrförmigen Gehäuseteil sicherstellt.

In einer vorteilhaften Ausführungsform des Fluidverbinders erstrecken sich der erste und zweite Kragen winklig, insbesondere rechtwinklig, zu einer Längsrichtung des Fluidverbinders.

Dadurch wird beispielsweise der technische Vorteil erreicht, dass ein nicht beabsichtigtes Herausziehen des rohrförmigen Verbindungselements aus dem ersten rohrförmigen Gehäuseteil und aus dem zweiten rohrförmigen Gehäuseteil verhindert wird.

In einer vorteilhaften Ausführungsform des Fluidverbinders weist der erste Anschluss einen ersten Vorsprung mit einer ersten Hinterschneidung auf, und ist ein erstes Verbindungsglied der ersten fluidtechnischen Leitung in die erste Hinterschneidung einführbar, um die erste fluidtechnische Leitung mit dem ersten Anschluss zu verbinden, insbesondere formschlüssig und/oder kraftschlüssig zu verbinden, und weist der zweite Anschluss einen zweiten Vorsprung mit einer zweiten Hinterschneidung aufweist, und ist ein zweites Verbindungsglied der zweiten fluidtechnischen Leitung in die zweite Hinterschneidung einführbar, um die zweite fluidtechnische Leitung mit dem zweiten Anschluss zu verbinden, insbesondere formschlüssig und/oder kraftschlüssig zu verbinden.

Dadurch wird beispielsweise der technische Vorteil erreicht, dass durch das Einführen des jeweiligen Verbindungsglieds in die jeweilige Hinterschneidung des jeweiligen Vorsprungs eine besonders wirksame Fixierung der jeweiligen fluidtechnischen Leitung an dem Fluidverbinder sichergestellt wird.

In einer vorteilhaften Ausführungsform ist das rohrförmige Verbindungselement gegenüber dem ersten rohrförmigen Gehäuseteil axial und/oder radial bewegbar in dem Fluidverbinder gelagert. In einer vorteilhaften Ausführungsform ist das rohrförmige Verbindungselement gegenüber dem zweiten rohrförmigen Gehäuseteil axial und/oder radial bewegbar in dem Fluidverbinder gelagert.

Dadurch wird beispielsweise der technische Vorteil erreicht, dass eine vorteilhafte Bewegbarkeit des rohrförmigen Verbindungselements gegenüber den jeweiligen rohrförmigen Gehäuseteilen einen besonders wirksamen Einbau des flexibel verformbaren Fluidverbinders in einer in einer räumlich begrenzten Bauraumsituation ermöglicht.

In einer vorteilhaften Ausführungsform ist das erste rohrförmige Gehäuseteil gegenüber der ersten fluidtechnischen Leitung axial und/oder radial bewegbar in dem Fluidverbinder gelagert. In einer vorteilhaften Ausführungsform ist das zweite rohrförmige Gehäuseteil gegenüber der zweiten fluidtechnischen Leitung axial und/oder radial bewegbar in dem Fluidverbinder gelagert.

Dadurch wird beispielsweise der technische Vorteil erreicht, dass eine vorteilhafte Bewegbarkeit des rohrförmigen Verbindungselements gegenüber den jeweiligen fluidtechnischen Leitungen einen besonders wirksamen Einbau des flexibel verformbaren Fluidverbinders in einer in einer räumlich begrenzten Bauraumsituation ermöglicht.

In einer vorteilhaften Ausführungsform des Fluidverbinders weist das erste oder zweite rohrförmige Gehäuseteil einen dritten Anschluss zum Verbinden mit einer Verbindungsvorrichtung, insbesondere Quick-Connector, auf.

Dadurch wird beispielsweise der technische Vorteil erreicht, dass durch den dritten Anschluss und der damit verbundenen Verbindungsvorrichtung sichergestellt werden kann, dass der Fluidverbinder in einem Zulauf und in einem Ablauf eines Fluidsystems eingesetzt werden kann. Die Verbindungsvorrichtung weist hierbei insbesondere einen Leitungsstutzen, insbesondere einen Tannenbaumanschluss, auf, durch welchen eine dritte fluidführende Leitung an die Verbindungsvorrichtung angeschlossen werden kann.

In einer vorteilhaften Ausführungsform des Fluidverbinders erstreckt sich der dritte Anschluss winklig, insbesondere rechtwinklig, zu einer Längsachse des Fluidverbinders.

Dadurch wird beispielsweise der technische Vorteil erreicht, dass eine T-förmige Ausbildung des Fluidverbinders eine besonders vorteilhafte Anbindung des Fluidverbinders an einen Ablauf oder an einen Zulauf eines Fluidsystems sicherstellt.

In einer vorteilhaften Ausführungsform des Fluidverbinders weist der Fluidverbinder eine Verbindungsnut auf, welche den dritten Anschluss umläuft, und wobei die Verbindungsvorrichtung, insbesondere Quick-Connector, ausgebildet ist, an der Verbindungsnut einzugreifen.

Dadurch wird beispielsweise der technische Vorteil erreicht, dass durch das Eingreifen der Verbindungsvorrichtung, insbesondere Quick-Connector, in die Verbindungsnut, ein wirksames Befestigen der Verbindungsvorrichtung an dem dritten Anschluss sichergestellt werden kann, bzw. die Verbindungsvorrichtung auch wieder vorteilhaft von dem dritten Anschluss gelöst werden kann.

Gemäß einem zweiten Aspekt der Erfindung wird die Aufgabe durch ein Fluidverbindungssystem zum Herstellen einer Fluidverbindung gelöst, mit einem Fluidverbinder nach dem ersten Aspekt; und einer Verbindungsvorrichtung, insbesondere Quick-Connector, wobei die Verbindungsvorrichtung mit dem dritten Anschluss des ersten oder zweiten rohrförmigen Gehäuseteils verbindbar ist.

Dadurch wird beispielsweise der technische Vorteil erreicht, dass durch das Fluidverbindungssystem der Fluidverbinder umfassend den ersten, zweiten und dritten Anschluss vorteilhaft mit einer ersten, zweiten und dritten fluidtechnischen Leitung verbunden werden kann.

Ausführungsbeispiele der Erfindung sind in den Zeichnungen dargestellt und werden im Folgenden näher beschrieben.

Es zeigen:
- Fig. 1: eine perspektivische Ansicht eines Fluidverbinders mit einem Verbindungselement; und
- Fig. 2: eine perspektivische Ansicht eines Fluidverbinders mit einem Verbindungselement in einer Schnittdarstellung.

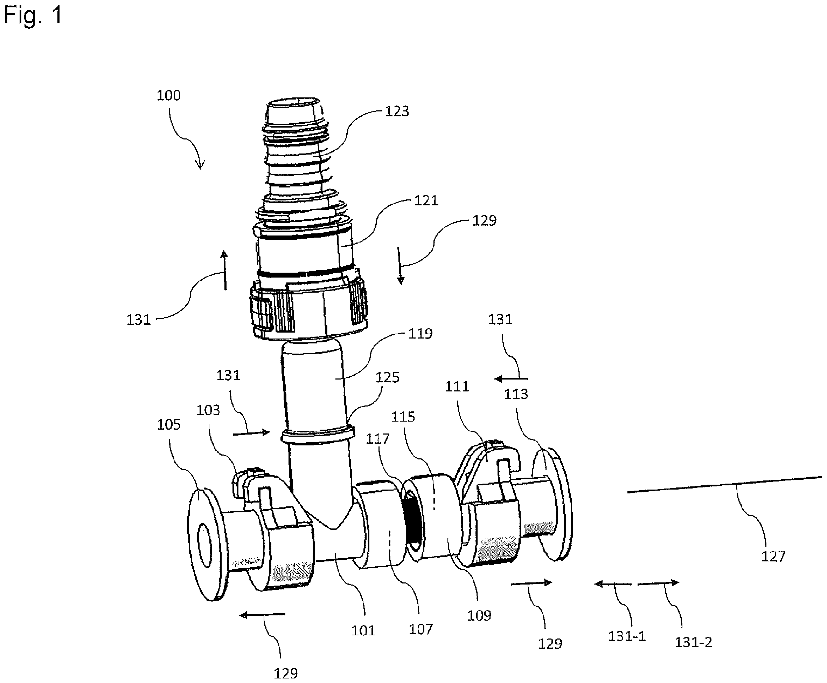

Fig. 1 zeigt eine perspektivische Ansicht eines Fluidverbinders 100 mit einem Verbindungselement. Der Fluidverbinder 100 dient zum Herstellen einer Fluidverbindung. Der Fluidverbinder 100 ermöglicht beispielsweise Kühlmittel-führende Fluidleitungen, welche zur Kühlung von Batteriezellen in einem elektrisch angetriebenen Fahrzeug verwendet werden, zu kühlen. Der Fluidverbinder 100 kann jedoch auch zur fluidtechnischen Verbindung von Kraftstoffleitungen in Kraftfahrzeugen oder Getriebeölleitungen in Fahrzeugen eingesetzt werden.

In elektrisch angetriebenen Fahrzeugen wird die zum Betrieb der Elektromotoren benötigte elektrische Energie in Batterien gespeichert und bei Bedarf aus den Batterien abgerufen. Um eine besonders lange Lebensdauer und einen hohen Wirkungsgrad der Batterien sicherzustellen, ist es entscheidend die maximale Temperatur der Batterien während des Betriebs zu begrenzen. Hierzu kann die während des Betriebs der Batterien entstehende Abwärme durch ein Kühlsystem abgeführt werden. In einem solchen Kühlsystem wird ein Kühlmittel, z.B. ein Wasser/Glykol-Gemisch, durch Fluidleitungen zirkuliert, um die durch Batterien abgegebene Abwärme wirksam aufzunehmen.

Um in der beengten Bauraumsituation des elektrisch angetriebenen Fahrzeuges eine wirksame Wärmeabfuhr sicherzustellen, werden verschiedene Fluidleitungen des Kühlsystems durch Fluidverbinder 100 miteinander verbunden, wobei hierbei die Fluidleitungen oftmals mit engen Biegeradien innerhalb des Fahrzeuges verlegt werden.

Um eine solche Bauraum-sparende Montage der Fluidleitungen in dem Fahrzeug zu ermöglichen, ist es vorteilhaft, wenn die Fluidverbinder 100 Toleranzen, Dispersionen und/oder Vibrationen ausgleichen können.

Der Fluidverbinder 100 gemäß der Fig. 1 umfasst ein erstes rohrförmiges Gehäuseteil 101 mit einem ersten Anschluss 103 zum Verbinden mit einer ersten fluidtechnischen Leitung, und umfasst ein zweites rohrförmiges Gehäuseteil 109 mit einem zweiten Anschluss 111 zum Verbinden mit einer zweiten fluidtechnischen Leitung.

In der in Fig. 1 dargestellten Ausführungsform ist ein erstes Verbindungsglied 105 der ersten fluidtechnischen Leitung dargestellt, welches mit dem ersten Anschluss 103 verbunden ist, und ist ein zweites Verbindungsglied 113 der zweiten fluidtechnischen Leitung dargestellt, welches mit dem zweiten Anschluss 111 verbunden ist. Auch wenn dies in Fig. 1 nicht dargestellt ist, ist das erste Verbindungsglied 105 mit der ersten fluidtechnischen Leitung verbunden. Auch wenn dies in Fig. 1 nicht dargestellt ist, ist das zweite Verbindungsglied 113 mit der zweiten fluidtechnischen Leitung verbunden.

Das erste rohrförmige Gehäuseteil 101 weist eine erste Verbindungsaufnahme 107 auf, und das zweite rohrförmige Gehäuseteil 109 weist eine zweite Verbindungsaufnahme 115 auf. Um das erste rohrförmige Gehäuseteil 101 mit dem zweiten rohrförmigen Gehäuseteil 109 zu verbinden, weist der Fluidverbinder 100 ein rohrförmiges Verbindungselement 117 auf, welches mit der ersten Verbindungsaufnahme 107 des ersten rohrförmigen Gehäuseteils 101, und welches mit der zweiten Verbindungsaufnahme 115 des zweiten rohrförmigen Gehäuseteils 109 verbunden ist.

Dadurch stellt das rohrförmige Verbindungselement 117 sicher, dass das erste rohrförmige Gehäuseteil 101 und das zweite rohrförmige Gehäuseteil 109 fluidtechnisch und fluiddicht wirksam miteinander verbunden sind, so dass Fluid von dem ersten Gehäuseteil 101 durch das rohrförmige Verbindungselement 117 und durch das zweite rohrförmige Gehäuseteil 109 wirksam geleitet werden kann.

Hier ist das rohrförmige Verbindungselement 117 als ein elastisches rohrförmiges Verbindungselement 117 ausgebildet, welches insbesondere aus einem Elastomer besteht. Das rohrförmige Verbindungselement 117 ist hierbei insbesondere zumindest abschnittsweise verformbar, um das erste rohrförmige Gehäuseteil 101 gegenüber dem zweiten rohrförmigen Gehäuseteil 109 zumindest abschnittsweise zu bewegen.

Durch die Verformbarkeit des rohrförmigen Verbindungselements 117 ermöglicht das rohrförmige Verbindungselement 117 einen Ausgleich von Toleranzen, Dispersionen und Vibrationen innerhalb des Fluidverbinders 100.

Um einen wirksamen Toleranzausgleich sicherzustellen kann das rohrförmige Verbindungselement 117 gegenüber dem ersten rohrförmigen Gehäuseteil 101 und/oder gegenüber dem zweiten rohrförmigen Gehäuseteil 109 axial und/oder radial bewegbar in dem Fluidverbinder 100 gelagert sein.

Um einen wirksamen Toleranzausgleich sicherzustellen, kann ferner das erste rohrförmige Gehäuseteil 101 gegenüber der ersten fluidtechnischen Leitung axial und/oder radial bewegbar in dem Fluidverbinder 100 gelagert sein. Um einen wirksamen Toleranzausgleich sicherzustellen, kann ferner das zweite rohrförmige Gehäuseteil 109 gegenüber der zweiten fluidtechnischen Leitung axial und/oder radial bewegbar in dem Fluidverbinder 100 gelagert sein.

Dadurch wird beispielsweise der technische Vorteil erreicht, dass eine vorteilhafte Bewegbarkeit des rohrförmigen Verbindungselements 117 gegenüber den jeweiligen rohrförmigen Gehäuseteilen 101, 109, bzw. durch die Bewegbarkeit der rohrförmigen Gehäuseteile 101, 109 gegenüber den jeweiligen fluidtechnischen Leitungen, ein besonders wirksamer Einbau des flexibel verformbaren Fluidverbinders in einer räumlich begrenzten Bauraumsituation ermöglicht wird.

Das erste rohrförmige Gehäuseteil 101 weist einen dritten Anschluss 119 zum Verbinden mit einer Verbindungsvorrichtung 121, insbesondere Quick-Connector, auf. Die Verbindungsvorrichtung 121, insbesondere Quick-Connector, weist hierbei einen Leitungsstutzen 123, insbesondere Tannenbaumanschluss, auf, auf welchen eine dritte Fluidleitung aufgesteckt werden kann.

Um eine wirksame Verbindung zwischen dem dritten Anschluss 119 des ersten rohrförmigen Gehäuseteils 101 und der Verbindungsvorrichtung 121 sicherzustellen, weist der dritte Anschluss 119 eine Verbindungsnut 125 auf, welche den dritten Anschluss 119 umläuft, und wobei die Verbindungsvorrichtung 121, insbesondere Quick-Connector, ausgebildet ist, an der Verbindungsnut 125 einzugreifen, um die Verbindungsvorrichtung 121 an dem dritten Anschluss 119 zu befestigen.

Das erste rohrförmige Gehäuseteil 101 und das zweite rohrförmige Gehäuseteil 109 des Fluidverbinders 100 erstrecken sich entlang einer Längsachse 127 des Fluidverbinders 100. Der dritte Anschluss 119 des ersten rohrförmigen Gehäuseteils 101 erstreckt sich winklig, insbesondere rechtwinklig, zu einer Längsachse 127 des Fluidverbinders 100.

Durch die Verformbarkeit des rohrförmigen Verbindungselements 117 können beim Verlegen der fluidtechnischen Leitungen das erste rohrförmige Gehäuseteil 101 und das zweite rohrförmige Gehäuseteil 109 gegeneinander abgewinkelt werden. Somit kann eine radiale Montage des Fluidverbinders 100 im Bauraum des Fahrzeuges ermöglicht werden, wodurch das Anschlusssystem bauraumsparend ausgelegt werden kann. Zudem können Toleranzen, Dispersionen und Vibrationen ausgeglichen werden.

Wenn der Fluidverbinder 100 in einem Zulauf des Batteriesystems eingesetzt wird, wird das Fluid in einer Zulaufrichtung 129 dem Batteriesystem zugeführt.

Hierbei wird das Fluid durch die dritte fluidtechnische Leitung und durch den dritten Anschluss 119 dem ersten rohrförmigen Gehäuseteil 101 und dem zweiten rohrförmigen Gehäuseteil 109 in der Zulaufrichtung 129 zugeführt, wobei das Fluid anschließend durch das erste rohrförmige Gehäuseteil 101 der ersten fluidtechnischen Leitung und durch das zweite rohrförmige Gehäuseteil 109 der zweiten fluidtechnischen Leitung in der Zulaufrichtung 129 zugeführt wird.

Wenn der Fluidverbinder 100 in einem Ablauf des Batteriesystems eingesetzt wird, wird das Fluid in einer Ablaufrichtung 131 aus dem Batteriesystem abgeführt.

Hierbei wird das Fluid durch die erste fluidtechnische Leitung in das erste rohrförmige Gehäuseteil 101 und durch die zweite fluidtechnische Leitung in das zweite rohrförmige Gehäuseteil 109 in der Ablaufrichtung 131 geleitet, wobei das Fluid anschließend in den dritten Anschluss 119 und in die dritte fluidtechnische Leitung in der Ablaufrichtung 131 geleitet wird.

Auch wenn dies in dem in Fig. 1 dargestellten Ausführungsbeispiel nicht gezeigt ist, kann der Fluidverbinder 100 auch keinen dritten Anschluss 119 aufweisen, sondern nur den ersten Anschluss 103 zum Verbinden mit der ersten fluidtechnischen Leitung und nur den zweiten Anschluss 111 zum Verbinden mit der zweiten fluidtechnischen Leitung aufweisen.

In diesem Fall kann das durch den Fluidverbinder 100 geleitete Fluid nur durch das erste rohrförmige Gehäuseteil 101 und durch das zweite rohrförmige Gehäuseteil 109 zwischen der ersten fluidtechnischen Leitung und der zweiten fluidtechnischen Leitung in der ersten Austauschrichtung 133-1 und in der zweiten Austauschrichtung 133-2 strömen.

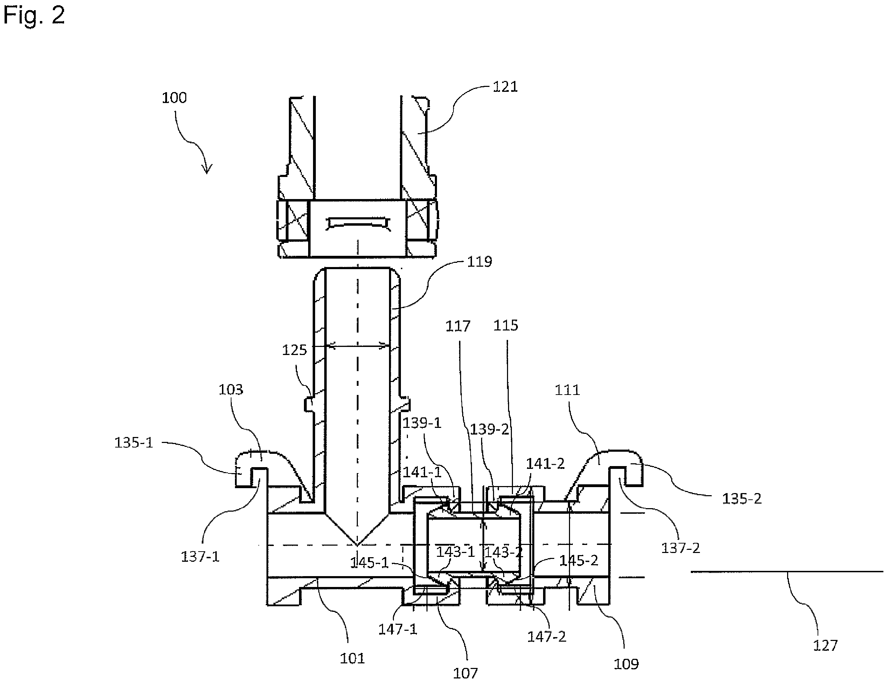

Fig. 2 zeigt eine perspektivische Ansicht eines Fluidverbinders mit einem Verbindungselement in einer Schnittdarstellung.

Der in der Fig. 1 dargestellte Fluidverbinder 100 ist in der Fig. 2 in einer Schnittdarstellung gezeigt. Der Fluidverbinder 100 weist ein erstes rohrförmiges Gehäuseteil 101 mit einem ersten Anschluss 103 zum Verbinden mit einer ersten fluidtechnischen Leitung auf, und weist ein zweites rohrförmiges Gehäuseteil 109 mit einem zweiten Anschluss 111 zum Verbinden mit einer zweiten fluidtechnischen Leitung auf.

Um eine wirksame Verbindung mit einem in Fig. 2 nicht dargestellten ersten Verbindungelement 105 der ersten fluidtechnischen Leitung zu ermöglichen, weist der erste Anschluss 103 einen ersten Vorsprung 135-1 mit einer ersten Hinterschneidung 137-1 auf, in welche das erste Verbindungsglied 105 eingreifen kann. Um eine wirksame Verbindung mit einem in Fig. 2 nicht dargestellten zweiten Verbindungelement 113 der zweiten fluidtechnischen Leitung zu ermöglichen, weist der zweite Anschluss 111 einen zweiten Vorsprung 135-2 mit einer zweiten Hinterschneidung 137-2 auf, in welche das zweite Verbindungsglied 113 eingreifen kann.

Das erste rohrförmige Gehäuseteil 101 und das zweite rohrförmige Gehäuseteil 109 sind durch ein elastisches und zumindest abschnittsweise verformbares rohrförmiges Verbindungselement 117 miteinander verbunden, um ein Bewegen des ersten rohrförmigen Gehäuseteil 101 und des zweiten rohrförmige Gehäuseteils 109 gegeneinander zu ermöglichen.

Die erste Verbindungsaufnahme 107 des ersten rohrförmigen Gehäuseteils 101 weist einen nach Innen geformten umlaufenden ersten Kragen 139-1 auf. Die zweite Verbindungsaufnahme 115 des zweiten rohrförmigen Gehäuseteils 109 weist einen nach Innen geformten umlaufenden zweiten Kragen 139-2 auf.

Hierbei weist das rohrförmige Verbindungselement 117 einen ersten umlaufenden verformbaren Rastvorsprung 141-1 auf, welcher mit dem ersten Kragen 139-1 formschlüssig verrastbar verbunden ist. Hierbei weist das rohrförmige Verbindungselement 117 einen zweiten umlaufenden verformbaren Rastvorsprung 141-2 auf, welcher mit dem zweiten Kragen 139-2 formschlüssig verrastbar verbunden ist.

Durch die jeweiligen Rastverbindungen kann ein Herausziehen des rohrförmigen Verbindungselements 117 aus dem ersten rohrförmigen Gehäuseteil 101 und aus dem zweiten rohrförmigen Gehäuseteil 109 verhindert werden.

Das rohrförmige Verbindungselement 117 weist ferner einen ersten Dichtabschnitt 143-1 und einen zweiten Dichtabschnitt 143-2 auf. Der erste Dichtabschnitt 143-1 ist in der ersten Verbindungsaufnahme 107 aufgenommen und der zweite Dichtabschnitt 143-2 ist in der zweiten Verbindungsaufnahme 115 aufgenommen.

Hierbei weist der erste Dichtabschnitt 143-1 eine erste Dichtfläche 145-1 auf, welche an einer ersten Verbindungsdichtfläche 147-1 der ersten Verbindungsaufnahme 107 anliegt. Hierbei weist der zweite Dichtabschnitt 143-2 eine zweite Dichtfläche 145-2 auf, welche an einer zweiten Verbindungsdichtfläche 147-2 der zweiten Verbindungsaufnahme 115 anliegt.

Während sich die erste und zweite Verbindungsdichtfläche 147-1, 147-2 entlang einer Längsachse 127 des Fluidverbinders 100 erstrecken, erstrecken sich die erste und zweite Dichtfläche 145-1, 145-2 hierbei schräg zu der Längsachse 127 des Fluidverbinders 100.

Somit wird eine wirksame formschlüssige und/oder kraftschlüssige Verbindung des jeweiligen Dichtabschnitts 143-1, 143-2 mit der jeweiligen Verbindungsaufnahme 107, 115 sichergestellt, wodurch eine besonders wirksame fluidtechnische Abdichtung sichergestellt wird.

Das erste rohrförmige Gehäuseteil 101 weist einen dritten Anschluss 119 zum Verbinden mit einer Verbindungsvorrichtung 121, insbesondere Quick-Connector, auf. Die Verbindungsvorrichtung 121, insbesondere Quick-Connector, weist hierbei einen Leitungsstutzen 123, insbesondere Tannenbaumanschluss, auf, auf welchen eine dritte Fluidleitung aufgesteckt werden kann.

Um eine wirksame Verbindung zwischen dem dritten Anschluss 119 des ersten rohrförmigen Gehäuseteils 101 und der Verbindungsvorrichtung 121 sicherzustellen, weist der dritte Anschluss 119 eine Verbindungsnut 125 auf, welche den dritten Anschluss 119 umläuft, und wobei die Verbindungsvorrichtung 121, insbesondere Quick-Connector, ausgebildet ist, an der Verbindungsnut 125 einzugreifen, um die Verbindungsvorrichtung 121 an dem dritten Anschluss 119 zu befestigen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fluidverbinder
- 101: Erstes rohrförmiges Gehäuseteil
- 103: Erster Anschluss
- 105: Erstes Verbindungsglied
- 107: Erste Verbindungsaufnahme
- 109: Zweites rohrförmiges Gehäuseteil
- 111: Zweiter Anschluss
- 113: Zweites Verbindungsglied
- 115: Zweite Verbindungsaufnahme
- 117: Rohrförmiges Verbindungselement
- 119: Dritter Anschluss
- 121: Verbindungsvorrichtung
- 123: Leitungsstutzen
- 125: Verbindungsnut
- 127: Längsachse des Fluidverbinders
- 129: Zulaufrichtung
- 131: Ablaufrichtung
- 133-1: Erste Austauschrichtung
- 133-2: Zweite Austauschrichtung
- 135-1: Erster Vorsprung
- 135-2: Zweiter Vorsprung
- 137-1: Erste Hinterschneidung
- 137-2: Zweite Hinterschneidung
- 139-1: Erster Kragen
- 139-2: Zweiter Kragen
- 141-1: Erster umlaufender verformbarer Rastvorsprung
- 141-2: Zweiter umlaufender verformbarer Rastvorsprung
- 143-1: Erster Dichtabschnitt
- 143-2: Zweiter Dichtabschnitt
- 145-1: Erste Dichtfläche
- 145-2: Zweite Dichtfläche
- 147-1: Erste Verbindungsdichtfläche
- 147-2: Zweite Verbindungsdichtfläche

## Patentansprüche

1. Fluidverbinder (100) zum Herstellen einer Fluidverbindung, mit:
einem ersten rohrförmigen Gehäuseteil (101), wobei das erste rohrförmige Gehäuseteil (101) einen ersten Anschluss (103) zum Verbinden mit einer ersten fluidtechnischen Leitung aufweist, und wobei das erste rohrförmige Gehäuseteil (101) eine erste Verbindungsaufnahme (107) mit einem nach Innen geformten umlaufenden ersten Kragen (139-1) aufweist;
einem zweiten rohrförmigen Gehäuseteil (109), wobei das zweite rohrförmige Gehäuseteil (109) einen zweiten Anschluss (111) zum Verbinden mit einer zweiten fluidtechnischen Leitung aufweist, und wobei das zweite rohrförmige Gehäuseteil (109) eine zweite Verbindungsaufnahme (115) mit einem nach Innen geformten umlaufenden zweiten Kragen (139-2) aufweist; und
einem rohrförmigen Verbindungselement (117), wobei das rohrförmige Verbindungselement (117) einen ersten Dichtabschnitt (143-1) aufweist, welcher in der ersten Verbindungsaufnahme (107) aufgenommen ist, und wobei das rohrförmige Verbindungselement (117) einen zweiten Dichtabschnitt (143-2) aufweist, welcher in der zweiten Verbindungsaufnahme (115) aufgenommen ist,
wobei das rohrförmige Verbindungselement (117) einen ersten umlaufenden verformbaren Rastvorsprung (141-1) für eine Rastverbindung mit dem ersten Kragen (139-1) aufweist, wobei das rohrförmige Verbindungselement (117) einen zweiten umlaufenden verformbaren Rastvorsprung (141-2) für eine Rastverbindung mit dem zweiten Kragen (139-2) aufweist, und
wobei das rohrförmige Verbindungselement (117) mit dem ersten rohrförmigen Gehäuseteil (101) und mit dem zweiten rohrförmigen Gehäuseteil (109) formschlüssig verrastbar und ausgebildet ist, das erste rohrförmige Gehäuseteil (101) und das zweite rohrförmige Gehäuseteil (109) fluiddicht zu verbinden.

2. Fluidverbinder (100) nach Anspruch 1, wobei das rohrförmige Verbindungselement (117) als ein elastisches rohrförmiges Verbindungselement (117) ausgebildet ist.

3. Fluidverbinder (100) nach Anspruch 1 oder 2, wobei das rohrförmige Verbindungselement (117) zumindest abschnittsweise verformbar ist, um das erste rohrförmige Gehäuseteil (101) gegenüber dem zweiten rohrförmigen Gehäuseteils (109) zumindest abschnittsweise zu bewegen.

4. Fluidverbinder (100) nach einem der vorangehenden Ansprüche, wobei der erste Dichtabschnitt (143-1) und der erste umlaufende verformbare Rastvorsprung (141-1) verbunden sind, und wobei der zweite Dichtabschnitt (143-2) und der zweite umlaufende verformbare Rastvorsprung (141-2) verbunden sind.

5. Fluidverbinder (100) nach einem der vorangehenden Ansprüche, wobei der erste und zweite Dichtabschnitt (143-1, 143-2) jeweils eine umlaufende Dichtlippe umfassen.

6. Fluidverbinder (100) nach einem der vorangehenden Ansprüche, wobei der erste Dichtabschnitt (143-1) mit der ersten Verbindungsaufnahme (107) formschlüssig und/oder kraftschlüssig verbunden ist, und wobei der zweite Dichtabschnitt (143-2) mit der zweiten Verbindungsaufnahme (115) formschlüssig und/oder kraftschlüssig verbunden ist.

7. Fluidverbinder (100) nach einem der vorangehenden Ansprüche, wobei die erste Verbindungaufnahme (107) eine erste Verbindungsdichtfläche (127-1) aufweist, wobei die zweite Verbindungaufnahme (115) eine zweite Verbindungsdichtfläche (127-2) aufweist, wobei der erste Dichtabschnitt (143-1) eine erste Dichtfläche (145-1) aufweist, welche an der ersten Verbindungsdichtfläche (127-1) fluiddicht anliegt, und wobei der zweite Dichtabschnitt (143-2) eine zweite Dichtfläche (145-2) aufweist, welche an der zweiten Verbindungsdichtfläche (127-2) fluiddicht anliegt.

8. Fluidverbinder (100) nach Anspruch 7, wobei sich die erste und zweite Verbindungsdichtfläche (127-1, 127-2) entlang einer Längsachse (127) des Fluidverbinders (100) erstrecken, und wobei sich die erste und zweite Dichtfläche (145-1, 145-2) insbesondere schräg zu einer Längsachse (127) des Fluidverbinders (100) erstrecken.

9. Fluidverbinder (100) nach einem der vorangehenden Ansprüche, wobei der erste umlaufende verformbare Rastvorsprung (141-1) an dem nach Innen geformten umlaufenden ersten Kragen (139-1) anliegt, um ein Herausziehen des rohrförmigen Verbindungselements (117) aus dem ersten rohrförmigen Gehäuseteil (101) zu verhindern, und wobei der zweite umlaufende verformbare Rastvorsprung (141-2) an dem nach Innen geformten umlaufenden zweiten Kragen (139-2) anliegt, um ein Herausziehen des rohrförmigen Verbindungselements (117) aus dem zweiten rohrförmigen Gehäuseteil (109) zu verhindern.

10. Fluidverbinder (100) nach Anspruch 9, wobei sich der erste und zweite Kragen (139-1, 139-2) winklig, insbesondere rechtwinklig, zu einer Längsrichtung des Fluidverbinders (100) erstrecken.

11. Fluidverbinder (100) nach einem der vorangehenden Ansprüche, wobei der erste Anschluss (103) einen ersten Vorsprung (135-1) mit einer ersten Hinterschneidung (137-1) aufweist, und wobei ein erstes Verbindungsglied (105) der ersten fluidtechnischen Leitung in die erste Hinterschneidung (137-1) einführbar ist, um die erste fluidtechnische Leitung mit dem ersten Anschluss (103) zu verbinden, insbesondere formschlüssig und/oder kraftschlüssig zu verbinden, und wobei der zweite Anschluss (111) einen zweiten Vorsprung (135-2) mit einer zweiten Hinterschneidung (137-2) aufweist, und wobei ein zweites Verbindungsglied (113) der zweiten fluidtechnischen Leitung in die zweite Hinterschneidung (137-2) einführbar ist, um die zweite fluidtechnische Leitung mit dem zweiten Anschluss (111) zu verbinden, insbesondere formschlüssig und/oder kraftschlüssig zu verbinden.

12. Fluidverbinder (100) nach einem der vorangehenden Ansprüche, wobei das erste oder zweite rohrförmige Gehäuseteil (101, 109) einen dritten Anschluss (119) zum Verbinden mit einer Verbindungsvorrichtung (121), insbesondere Quick-Connector, aufweist.

13. Fluidverbinder (100) nach Anspruch 12, wobei sich der dritte Anschluss (119) winklig, insbesondere rechtwinklig, zu einer Längsachse (127) des Fluidverbinders (100) erstreckt.

14. Fluidverbinder (100) nach Anspruch 12 oder 13, wobei Fluidverbinder (100) eine Verbindungsnut (125) aufweist, welche den dritten Anschluss (119) umläuft, und wobei die Verbindungsvorrichtung (121), insbesondere Quick-Connector, ausgebildet ist, an der Verbindungsnut (125) einzugreifen.

15. Fluidverbindungssystem zum Herstellen einer Fluidverbindung, mit:
einem Fluidverbinder (100) nach einem der Ansprüche 12 bis 14; und
einer Verbindungvorrichtung (121), insbesondere Quick-Connector, wobei die Verbindungsvorrichtung (121) mit dem dritten Anschluss (119) des ersten oder zweite rohrförmigen Gehäuseteils (101, 109) verbindbar ist.
